# EUROPÄISCHE PATENTSCHRIFT

(11) **EP 3 444 076 B1**
(45) Veröffentlichungstag und Bekanntmachung des Hinweises auf die Patenterteilung: **17.06.2020**
(21) Anmeldenummer: 17186586.8
(22) Anmeldetag: 17.08.2017
(51) Int. Cl.: B25J 9/16

(54) **VERFAHREN ZUR ABSOLUTPOSITIONSBESTIMMUNG EINES ROBOTISCHEN GERÄTES UND ROBOTISCHES GERÄT**
METHOD FOR DETERMINING ABSOLUTE POSITION OF A ROBOTIC DEVICE AND ROBOTIC DEVICE
PROCÉDÉ DE DÉTERMINATION DE LA POSITION ABSOLUE D'UN APPAREIL ROBOTIQUE ET APPAREIL ROBOTIQUE

(43) Veröffentlichungstag der Anmeldung: 20.02.2019
(73) Patentinhaber: Siemens Healthcare GmbH, 91052 Erlangen (DE)
(72) Erfinder: MÖNNICH, Holger, 86316 Friedberg (DE)

(56) Entgegenhaltungen:
- EP-A2- 1 525 954
- DE-A1-102015 013 635

## Beschreibung

Die Erfindung betrifft ein Verfahren zur Absolutpositionsbestimmung des Endeffektors eines robotischen Gerätes gemäß dem Patentanspruch 1 sowie ein robotisches Gerät zur Durchführung eines derartigen Verfahrens gemäß dem Patentanspruch 4.

Robotische Geräte mit einer Kette von bewegbaren Komponenten wie z.B. serielle Knickarmroboter zeichnen sich typischerweise nicht durch eine hohe absolute Genauigkeit in ihrer Positionierung aus (Genauigkeit in Bezug auf ein externes Koordinatensystem). So fahren sie zwar Positionen sehr exakt immer wieder an, die sogenannte Wiederholgenauigkeit beträgt typischerweise < 0,1 mm, fahren i.A. Positionen aber absolut nicht genau an, so dass Abweichungen im Arbeitsraum im Bereich von Zentimetern auftreten. Dies ist bedingt durch Toleranzen in der Fertigung der Komponenten, durch Abweichungen zwischen dem verwendeten CAD-Modell des Roboters und dem realen Roboter (geometrische Abweichungen) und durch dynamische Effekte - hier vor allem die Durchbiegung des Roboters aufgrund der Erdanziehung. Hierbei hat die Elastizität des Getriebes typischerweise einen sehr hohen Einfluss während die Struktur des Roboters einen geringen Einfluss hat. Weitere Abweichungen entstehen durch andere Einflussfaktoren wie z.B. die Temperatur und die dadurch bedingte Ausdehnung des Materials (im Bereich von Zehntelmillimetern).

Bisherige bekannte serielle Knickarmroboter verwenden Modellwerte um den Fehler zu kompensieren, dies geschieht typischerweise im Bereich von ∼0,5 mm. Die Annahmen aus dem mathematischen Modell beruhen bei dynamischen Effekten rein auf Modellwerten. Zur Modellierung von Fehlern siehe z.B. Biniam Yohannes, Kalibrierung des Leichtbauroboters mit sieben Freiheitsgraden, Diplomarbeit, Kap. 3.4 und 3.5, Seiten 21 - 31, 2008 oder U. Wiest, Kinematische Kalibrierung von Industrierobotern, Dissertation, Kap. 3.4 und 3.5, Seiten 28 bis 34, 2001. Die verwendeten Modellwerte gelten im Rahmen ihrer Genauigkeit jedoch nur für den Fall und unter der Annahme, dass der Roboter sich frei im Raum bewegt und nicht im Kontakt steht. Steht der Roboter in Kontakt mit einem anderen Objekt oder treten weitere Fehler in den Modellwerten auf, so kann sich die absolute Genauigkeit bei der Positionierung eines Knickarmroboters und dessen Endeffektor deutlich verschlechtern.

Ähnliche Verfahren und Vorrichtungen sind aus EP 1525954 A2 und DE 102015013635 A1 bekannt.

Es ist Aufgabe der vorliegenden Erfindung, ein Verfahren bereitzustellen, welches eine Verbesserung der absoluten Genauigkeit bei der Positionierung von Knickarmrobotern insbesondere auch unter externem Einfluss ermöglicht; des Weiteren ist es Aufgabe der Erfindung, ein für die Durchführung des Verfahrens geeignetes robotisches Gerät bereitzustellen.

Die Aufgabe wird erfindungsgemäß gelöst durch ein Verfahren zur Absolutpositionsbestimmung des Endeffektors eines robotischen Gerätes gemäß dem Patentanspruch 1 und von einem robotischen Gerät gemäß dem Patentanspruch 4. Vorteilhafte Ausgestaltungen der Erfindung sind jeweils Gegenstand der zugehörigen Unteransprüche.

Bei dem erfindungsgemäßen Verfahren zur Absolutpositionsbestimmung des Endeffektors eines robotischen Gerätes mit einer kinematischen Kette von bewegbaren Komponenten wird zumindest ein aktuelles Drehmoment oder ein zum Drehmoment korrespondierender Wert an zumindest einer bewegbaren Komponente der kinematischen Kette des robotischen Geräts mittels an der bewegbaren Komponente angeordnetem Drehmomentsensor gemessen, wird zumindest ein auf der Basis von Modelldaten des robotischen Geräts für die bewegbare Komponente berechnetes Drehmoment bereitgestellt, wird eine Differenz zwischen dem gemessenen Drehmoment und dem errechneten Drehmoment bestimmt und es wird, wenn die Differenz einen vorgegebenen Schwellwert überschreitet, das zumindest eine gemessene Drehmoment anstelle des berechneten Drehmoments zur Bestimmung einer Absolutposition des Endeffektors des robotischen Gerätes verwendet. Durch das Verfahren wird bei der Bestimmung der Absolutposition die Genauigkeit deutlich erhöht und damit die Einsetzbarkeit des robotischen Gerätes für Applikationen, bei denen eine hohe Absolutgenauigkeit sehr relevant ist, erhöht. Mittels des erfindungsgemäßen Verfahrens können Abweichungen, welche durch Kontakt mit externen Gegenständen, Vorrichtungen oder Personen oder durch Fehler in den Modelldaten zu Stande kommen, detektiert werden. Anschließend können die Abweichungen durch verbesserte Werte ersetzt werden, so dass sie die Bestimmung der Absolutposition nicht mehr verfälschen können. Durch das Verfahren kann eine hohe Absolutgenauigkeit bei der Bestimmung der Position des Endeffektors erzielt werden.

Nach einer Ausgestaltung der Erfindung werden zumindest zwei aktuelle Drehmomente gemessen, zumindest zwei korrespondierende berechnete Drehmomente bereitgestellt, die zumindest zwei Differenzen bestimmt und für jede Differenz, welche einen vorgegebenen Schwellwert überschreitet, das gemessene Drehmoment anstelle des berechneten Drehmoments zur Bestimmung einer Absolutposition des Endeffektors des robotischen Gerätes verwendet. Idealerweise sind in oder an allen Achsen des robotischen Gerätes (z.B. beim Sechs- oder Siebenachsknickarmroboter an allen 6 oder 7 Achsen) Drehmomentsensoren angeordnet, an welchen entsprechende Werte für die Drehmomente gemessen werden und mit den berechneten Werten verglichen werden. Hierdurch kann eine zuverlässige und auch gegen externe Einflüsse gesicherte Absolutgenauigkeit von bis zu < 0,1 mm erzielt werden.

Nach einer weiteren Ausgestaltung der Erfindung wird die jeweilige Differenz als Ausgangspunkt für die Bestimmung des jeweiligen externen Drehmoments verwendet. Wird z.B. angenommen, dass kein Fehler in den Modellwerten vorhanden ist, kann aus der Differenz auf äußere Einflüsse wie Kontakt mit externen Gegenständen, Vorrichtungen oder Personen geschlossen werden.

Ein robotisches Gerät zur Durchführung des erfindungsgemäßen Verfahrens weist eine kinematischen Kette von bewegbaren Komponenten auf, wobei an zumindest einer bewegbaren Komponente der kinematischen Kette ein Drehmomentsensor zur Messung von einem Drehmoment oder einem zum Drehmoment korrespondierenden Wert angeordnet ist, aufweisend einen am Ende der kinematischen Kette angeordneten Endeffektor, welcher dafür ausgebildet ist, mittels des robotischen Geräts positioniert zu werden, aufweisend eine Systemsteuerung zur Ansteuerung der kinematischen Kette und der Drehmomentsensoren, eine Berechnungseinheit zur Bestimmung von berechneten Drehmomenten aus Modelldaten, zur Berechnung von Differenzen zwischen gemessenen und berechneten Drehmomenten, zum Vergleichen der Differenzen mit vorgegebenen Schwellwerten, sowie zur Bestimmung der Absolutposition des Endeffektors aus errechneten und gemessenen Drehmomenten. Insbesondere wird das robotische Gerät von einem seriellen Knickarmroboter gebildet, z.B. einem Sechsachsknickarmroboter oder einem Siebenachsknickarmroboter in Leichtbauform.

In vorteilhafter Weise für eine besonders genaue Positionierung weist das robotische Gerät mindestens zwei Drehmomentsensoren, welche an verschiedenen Punkten der kinematischen Kette angeordnet sind, auf; insbesondere sind zumindest so viel Drehmomentsensoren wie Achsen vorhanden und sind diese an den jeweiligen Achsen oder Gelenken angeordnet.

Die Erfindung sowie weitere vorteilhafte Ausgestaltungen gemäß Merkmalen der Unteransprüche werden im Folgenden anhand schematisch dargestellter Ausführungsbeispiele in der Zeichnung näher erläutert, ohne dass dadurch eine Beschränkung der Erfindung auf diese Ausführungsbeispiele erfolgt. Es zeigen:
- FIG 1: ein Ablauf eines erfindungsgemäßen Verfahrens; und
- FIG 2: eine Ansicht eines seriellen Knickarmroboters zur Durchführung des Verfahrens.

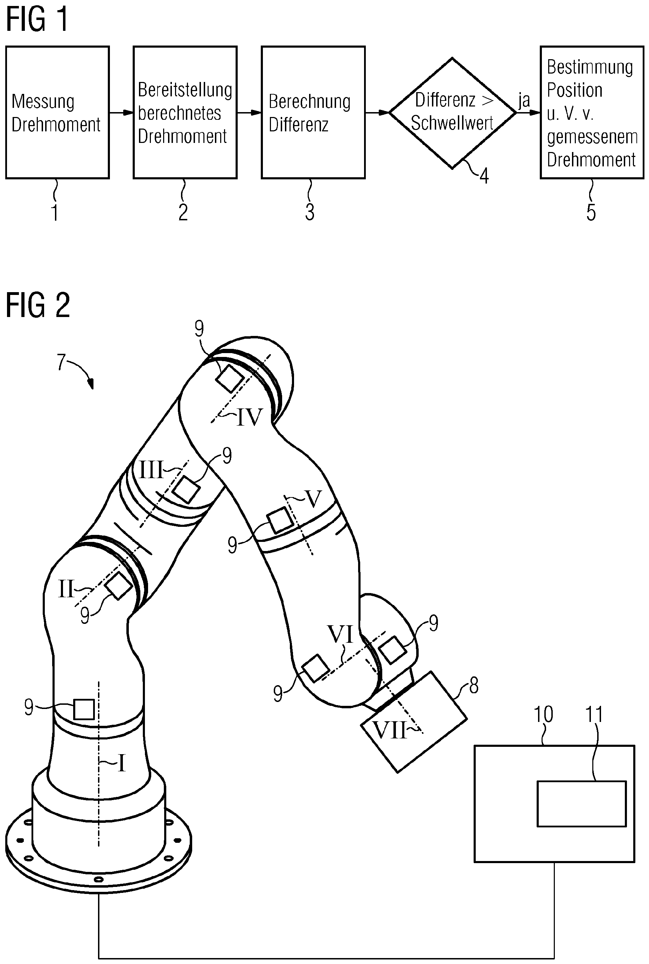

In der FIG 1 ist ein Ablauf eines erfindungsgemäßen Verfahrens zur Absolutpositionsbestimmung des Endeffektors eines robotischen Gerätes mit einer kinematischen Kette von bewegbaren Komponenten gezeigt. Ein Beispiel für ein robotisches Gerät zur Durchführung des Verfahrens ist in der FIG 2 in Form eines Siebenachsknickarmroboters 7 in Leichtbauweise gezeigt. Der Siebenachsknickarmroboters 7 weist sieben Achsen I bis VII auf, um welche er mittels entsprechender Gelenke bewegbar ist und besitzt damit sieben Freiheitgrade. Dadurch kann der am beweglichen Ende des Roboters angeordnete Endeffektor 8 (hierbei kann es sich um ein beliebiges Tool, Instrument oder einen Instrumentenhalter handeln) nach Bedarf flexibel positioniert werden. Für siebenachsige Roboter gilt, dass zu jeder Position und Orientierung im 3D-Raum unendlich viele Lösungen vorhanden sind. An zumindest einer Achse, bevorzugt an allen Achsen weist der Siebenachsknickarmroboter 7 Drehmomentsensoren 9 auf, mit denen an der entsprechenden Achse das Drehmoment bzw. ein zum Drehmoment korrespondierender Wert gemessen werden kann.

Das robotische Gerät wird von einer Systemsteuerung 10 angesteuert, diese steuert und/oder regelt z.B. die Bewegung der Achsen, die Positionierung des Endeffektors und die Drehmomentsensoren. Zusätzlich weist das robotische Gerät eine Berechnungseinheit 11 auf, welche z.B. in der Systemsteuerung 10 oder auch extern angeordnet sein kann. Die Berechnungseinheit 11 ist dazu ausgebildet, berechnete Drehmomente aus Modelldaten zu bestimmen. Die Modelldaten (z.B. die genaue Masse des robotischen Geräts und des daran befestigten Instruments, Werte für Fertigungstoleranzen, Werte für Temperatureffekte, Werte für dynamische Effekte ...) werden i.A. werksseitig mitgeliefert bzw. liegen bei Inbetriebnahme des robotischen Geräts vor und können z.B. in einem Speicher gespeichert sein. Aus den Modelldaten kann dann für eine eingenommene Position das entsprechende Drehmoment für jede Achse berechnet werden. Die Berechnungseinheit 11 ist außerdem dazu ausgebildet, eine Berechnung von Differenzen zwischen gemessenen und berechneten Drehmomenten zu bestimmen, die Differenzen mit vorgegebenen Schwellwerten zu vergleichen und die Absolutposition des Endeffektors unter Verwendung von gemessenen Drehmomenten zu berechnen.

In einem ersten Schritt 1 wird zumindest ein aktuelles Drehmoment oder ein zum Drehmoment korrespondierender Wert an zumindest einer Achse des robotischen Geräts, z.B. des Siebenachsknickarmroboters 7, mittels an der Achse angeordneten Drehmomentsensors gemessen. Insbesondere werden von allen vorhandenen Drehmomentsensoren das jeweilige aktuelle Drehmoment oder der zum Drehmoment korrespondierende Wert gemessen. In einem zweiten Schritt 2 wird zumindest ein auf der Basis von Modelldaten des robotischen Geräts für die Achse berechnetes Drehmoment bereitgestellt. Die Modelldaten sind i.A. in einem Speicher vorhanden und können bei Bedarf jederzeit genutzt werden. Aus den Modelldaten (z.B. die genaue Masse des robotischen Geräts und des daran befestigten Instruments, Werte für Fertigungstoleranzen, Werte für Temperatureffekte, Werte für dynamische Effekte usw.) kann mittels Modellrechnung für die entsprechende Achse das Drehmoment berechnet werden. Zur Berechnung kann z.B. die Berechnungseinheit oder die Systemsteuerung verwendet werden. Die Berechnung und die Messung können gleichzeitig oder nacheinander durchgeführt werden.

Anschließend wird in einem dritten Schritt 3 für jede betroffene Achse eine Differenz aus dem jeweiligen gemessenen Drehmoment und berechneten Drehmoment gebildet. Diese Differenz kann auch als "externes Moment" bezeichnet werden. Es kann entweder durch Fehler in der Modellrechnung oder durch externen Einfluss, z.B. Kontakt mit einem externen Gegenstand, hervorgerufen werden. Weicht die Differenz deutlich von Null ab, so ist davon auszugehen, dass eine Abweichung von der Absolutposition zu erwarten ist. In einem vierten Schritt 4 wird die Differenz mit einem zuvor bestimmten Schwellwert verglichen. Dies kann z.B. auch mittels der Berechnungseinheit oder einer Vergleichseinheit durchgeführt werden. Der Schwellwert kann zuvor manuell oder automatisch festgelegt werden oder bereits werksseitig vorgegeben sein. Wird der Schwellwert überschritten, so wird in einem fünften Schritt 5 das zumindest eine gemessene Drehmoment anstelle des berechneten Drehmoments zur Bestimmung der Absolutposition des Endeffektors des robotischen Gerätes verwendet.

Die Drehmomentsensoren liefern das gemessene Drehmoment an den Achsen oder Gelenken des Roboters. Da die Massen des Roboters und eventuell andere Daten bekannt sind, kann deren Einfluss auf das Drehmoment herausgerechnet werden. Das bleibende Drehmoment nennt man das externe Drehmoment. Dieses externe Drehmoment, sofern es nicht gleich Null ist, zeigt eine Abweichung zwischen Modellannahme und Ist-Situation an. Ob diese Abweichung durch Kontakt oder durch falsche Angaben zustande kommt, kann i.A. ohne weitere Hilfsmittel nicht ermittelt werden. Was aber genutzt werden kann, ist die Anpassung der dynamischen Korrektur. Unabhängig davon, wodurch die Abweichung zustande kommt, ist die Berechnung im absolutgenauen Modell nur korrekt, wenn das im Modell nicht wie bisher mit den Modellwerten rechnet, sondern mit den Modellwerten +/externem Drehmoment = gemessenes Ist-Drehmoment. Dadurch wird die Genauigkeit bei Kontakt oder falschen Modellannahmen gesteigert. Steht der Roboter im Kontakt oder wurde falsch konfiguriert (typisch: falsche Angabe der Masse am Endeffektor durch den User oder Veränderung der Masse, weil der EndEffektor ein Bauteil greift und dessen Masse und Zentrum der Masse nicht oder nur ungenau bekannt ist) so stimmen die Annahmen über die dynamischen Anteile im absoluten Modell nicht mehr. Durch die Drehmomentsensoren wird die Information aus dem Modell nicht mehr zwingend benötigt. Das Modell kann mit den gemessenen Drehmomenten gefüttert werden.

Die Erfindung lässt sich in folgender Weise zusammenfassen: Für eine besonders genaue Berechnung von Absolutpositionen bei der Positionsbestimmung des Endeffektors eines robotischen Gerätes werden im Fall einer Abweichung durch Drehmomentsensoren gemessene Drehmomente anstelle der üblichen, aus Modelldaten berechneten Drehmomente verwendet.

## Patentansprüche

1. Verfahren zur Absolutpositionsbestimmung eines Endeffektors (8) eines robotischen Gerätes mit einer kinematischen Kette von bewegbaren Komponenten, **dadurch gekennzeichnet, dass**
• zumindest ein aktuelles Drehmoment an zumindest einer bewegbaren Komponente der kinematischen Kette des robotischen Geräts mittels eines an der bewegbaren Komponente angeordneten Drehmomentsensors (9) gemessen wird,
• zumindest ein auf der Basis von Modelldaten des robotischen Geräts für die bewegbare Komponente berechnetes Drehmoment bereitgestellt wird,
• eine Differenz zwischen dem gemessenen Drehmoment und dem errechneten Drehmoment bestimmt wird, und
• wenn die Differenz einen vorgegebenen Schwellwert überschreitet, das zumindest eine gemessene Drehmoment anstelle des berechneten Drehmoments zur Bestimmung einer Absolutposition des Endeffektors (8) des robotischen Gerätes verwendet wird.

2. Verfahren nach Anspruch 1, wobei zumindest zwei aktuelle Drehmomente gemessen, zumindest zwei korrespondierende berechnete Drehmomente bereitgestellt werden, die zumindest zwei Differenzen bestimmt werden und für jede Differenz, welche einen vorgegebenen Schwellwert überschreitet, das gemessene Drehmoment anstelle des berechneten Drehmoments zur Bestimmung einer Absolutposition des Endeffektors (8) des robotischen Gerätes verwendet wird.

3. Verfahren nach einem der vorangehenden Ansprüche, wobei die jeweilige Differenz als Ausgangspunkt für die Bestimmung des jeweiligen externen Drehmoments verwendet wird.

4. Robotisches Gerät aufweisend eine kinematische Kette von bewegbaren Komponenten, wobei an zumindest einer bewegbaren Komponente der kinematischen Kette ein Drehmomentsensor (9) zur Messung von einem Drehmoment angeordnet ist, aufweisend einen am Ende der kinematischen Kette angeordneten Endeffektor (8), welcher dafür ausgebildet ist, mittels des robotischen Geräts positioniert zu werden, aufweisend eine Systemsteuerung zur Ansteuerung der kinematischen Kette und des zumindest einen Drehmomentsensors (9), **gekennzeichnet durch** eine Berechnungseinheit (11) die ausgebildet ist das Verfahren nach einem der Ansprüche 1-3 auszuführen.

5. Robotisches Gerät nach Anspruch 4, welches von einem seriellen Knickarmroboter gebildet wird.

6. Robotisches Gerät nach einem der Ansprüche 4 oder 5, aufweisend mindestens zwei Drehmomentsensoren (9), welche an verschiedenen Punkten der kinematischen Kette angeordnet sind.

## Claims

1. Method for absolute position determination of an end effector (8) of a robotic device with a kinematic chain of movable components, **characterised in that**
• at least one current torque is measured on at least one movable component of the kinematic chain of the robotic device by means of a torque sensor (9) arranged on the movable component,
• at least one torque calculated for the movable component on the basis of model data of the robotic device is provided,
• a difference between the measured torque and the calculated torque is determined, and
• if the difference exceeds a prespecified threshold value, the at least one measured torque is used instead of the calculated torque to determine an absolute position of the end effector (8) of the robotic device.

2. Method according to claim 1, wherein at least two current torques are measured, at least two corresponding calculated torques are provided, the at least two differences are determined, and for each difference that exceeds a prespecified threshold value, the measured torque is used instead of the calculated torque to determine an absolute position of the end effector (8) of the robotic device.

3. Method according to one of the preceding claims, wherein the respective difference is used as a starting point for the determination of the respective external torque.

4. Robotic device having a kinematic chain of movable components, wherein a torque sensor (9) for measuring a torque is arranged on at least one movable component of the kinematic chain, having an end effector (8) arranged on the end of the kinematic chain, which is embodied to be positioned by means of the robotic device, comprising a system control for actuating the kinematic chain and the at least one torque sensor (9), **characterised by** a calculating unit (11) which is embodied to execute the method according to one of claims 1-3.

5. Robotic device according to claim 4, which is formed by a serial articulated arm robot.

6. Robotic device according to one of claims 4 or 5, having at least two torque sensors (9), which are arranged on different points of the kinematic chain.

## Revendications

1. Procédé de détermination de la position absolue d'un effecteur (8) d'extrémité d'un appareil robotique ayant une chaîne cinématique de composants mobiles, **caractérisé en ce que**
• on mesure au moins un couple en cours d'au moins un composant mobile de la chaîne cinématique de l'appareil robotique au moyen d'un capteur (9) de couple monté sur le composant mobile,
• on se procure au moins un couple calculé pour le composant mobile sur la base de données de modèle de l'appareil robotique,
• on détermine une différence entre le couple mesuré et le couple calculé et,
• si la différence dépasse une valeur de seuil donnée à l'avance, on utilise le au moins un couple mesuré au lieu du couple calculé pour la détermination d'une position absolue de l'effecteur (8) d'extrémité de l'appareil robotique.

2. Procédé suivant la revendication 1, dans lequel on mesure au moins deux couples en cours, on se procure au moins deux couples calculés correspondants, on détermine les au moins deux différences et pour chaque différence, qui dépasse une valeur de seuil donnée à l'avance, on utilise le couple mesuré au lieu du couple calculé pour la détermination d'une position absolue de l'effecteur (8) d'extrémité de l'appareil robotique.

3. Procédé suivant l'une des revendications précédentes, dans lequel on utilise la différence respective comme point de départ pour la détermination du couple extérieur respectif.

4. Appareil robotique, comportant une chaîne cinématique de composants mobiles, dans lequel, sur au moins un composant mobile de la chaîne cinématique, est monté un capteur (9) de couple pour la mesure d'un couple, comportant un effecteur (8) d'extrémité, qui est monté à une extrémité de la chaîne cinématique et qui est constitué pour être mis en position au moyen de l'appareil robotique, comportant une commande de système pour commander la chaîne cinématique et le au moins un capteur (9) de couple, **caractérisé par** une unité (11) de calcul constituée pour exécuter le procédé suivant l'une des revendications 1 à 3.

5. Appareil robotique suivant la revendication 4, qui est formé d'un robot à bras coudé en série.

6. Appareil robotique suivant l'une des revendications 4 ou 5, comportant au moins deux capteurs (9) de couple, qui sont montés en des points différents de la chaîne cinématique.
